# EUROPÄISCHE PATENTANMELDUNG

(11) **EP 1 033 639 A1**
(43) Veröffentlichungstag der Anmeldung: **06.09.2000**
(21) Anmeldenummer: 00200503.1
(22) Anmeldetag: 16.02.2000
(51) Int. Cl.: G05D 23/275

(54) **Heizungsventil-Thermostataufsatz**

(30) Priorität: 02.03.1999 DE 19909099
(71) Anmelder: Danfoss A/S, 6430 Nordborg (DK)
(72) Erfinder: Frederiksen, Bjarne, 8600 Silkeborg (DK); Larsen, Arne Borge, 8660 Skanderborg (DK)

(57) **Zusammenfassung**

Es wird ein Heizungsventil-Thermostataufsatz (1) angegeben mit einem Thermostatelement (2), das in Abhängigkeit von der Umgebungstemperatur ein Betätigungsglied (5) verstellt, und einem Stellantrieb (17, 23, 24, 25, 14), der einen Wirkzusammenhang zwischen dem Betätigungsglied (5-9) und dem Thermostatelement (2) ändert.

Bei einem derartigen Thermostataufsatz möchte man das Komfortgefühl des Benutzers erhöhen können.

Hierzu wirkt der Stellantrieb (17, 23, 24, 25, 14) auf eine mechanische Anzeige (28, 29) ein.

## Beschreibung

Die Erfindung betrifft einen Heizungsventil-Thermostataufsatz mit einem Thermostatelement, das in Abhängigkeit von der Umgebungstemperatur ein Betätigungsglied verstellt, und einem Stellantrieb, der einen Wirkzusammenhang zwischen dem Betätigungsglied und dem Thermostatelement ändert.

Ein derartiger Thermostataufsatz ist beispielsweise aus DE 31 53 654 C2 bekannt. Dort ist das Betätigungsglied gebildet durch eine Spindel, die von dem Thermostatelement in Richtung auf einen Ventilstößel verschoben wird. Zum Ändern des Wirkzusammenhangs wird die "aktive" Länge dieser Spindel verändert. Dies erfolgt dadurch, daß zwischen der Spindel und dem Ventilstößel eine unrunde Scheibe angeordnet ist, die einen größeren und einen kleineren Durchmesser aufweist. Die Scheibe ist von einem Elektromotor angetrieben. Durch Verdrehen der Scheibe läßt sich die "aktive" Länge der Spindel ändern, so daß bei gleicher Umgebungstemperatur ein anderes Steuerverhalten des Thermostataufsatzes bewirkt wird.

Mit einem derartigen Thermostataufsatz läßt sich beispielsweise gezielt für jeden Heizkörper eine Nachtabsenkung vornehmen. Die Verlängerung der Spindel bewirkt dabei, daß das Ventil bei der gleichen Umgebungstemperatur stärker gedrosselt oder geschlossen wird. Das gleiche gilt natürlich auch dann, wenn der Thermostataufsatz zum Steuern einer Fußbodenheizung oder einer anderen Heizeinrichtung verwendet wird. Hierbei kann die Nachtabsenkung beispielsweise automatisch, d.h. zeitgesteuert erfolgen. Es ist aber auch möglich, daß man einem Benutzer diese Aufgabe überläßt.

Bei einem zeitgesteuerten Thermostataufsatz ist sich der Benutzer vielfach nicht bewußt, daß die Nachtabsenkung erfolgt ist. Da die Temperatur nur langsam absinkt, fängt er irgendwann an zu frösteln, was ihm unangenehm ist. Bei einer manuellen Einstellung der Nachtabsenkung ist eine Kontrolle, ob die Nachtabsenkung eingestellt ist oder nicht, schwierig, was vielen Benutzern ebenfalls ein gewisses Unbehagen verursacht.

Der Erfindung liegt die Aufgabe zugrunde, das Komfortgefühl eines Benutzers zu erhöhen.

Diese Aufgabe wird bei einem Thermostataufsatz der eingangs genannten Art dadurch gelöst, daß der Stellantrieb auf eine mechanische Anzeige einwirkt.

Damit wird angezeigt, ob der Thermostataufsatz beispielsweise den Betriebszustand "Komforttemperatur" oder "Nachtabsenkung" eingenommen hat. Durch einen Blick auf den Thermostataufsatz kann der Benutzer den jeweiligen Zustand erkennen und sein weiteres Verhalten danach richten. Wenn er beispielsweise bei "Nachtabsenkung" länger in dem Raum verweilen möchte, kann er die vorgegebene Temperatur erhöhen. Andernfalls kann er den Raum verlassen, ohne ein ungutes Gefühl wegen des Fröstelns zu behalten. Die mechanische Anzeige hat den Vorteil, daß sie die entsprechende Information permanent abgeben kann, ohne Hilfsenergien zu benötigen, wie dies beispielsweise bei Lampen oder Leuchtdioden der Fall ist. Lediglich zum Verändern der Anzeige, also dann, wenn der Stellantrieb auf die Anzeige einwirkt, ist eine kleine Energie notwendig. Unter "mecahnischer Anzeige" sollen also alle Anzeigen verstanden werden, die, abgesehen von der zum Verstellen nötigen Energie, ohne Hilfsenergie auskommen, um die gewünschte Information abzugeben.

Vorzugsweise weist die mechanische Anzeige eine erste Symbolfläche und eine zweite Symbolfläche auf, die durch den Stellantrieb verschiebbar sind. Die erste Symbolfläche kann beispielsweise mit dem Bild einer Sonne versehen sein, um anzuzeigen, daß der Thermostataufsatz auf "Komforttemperatur" oder Tageinstellung eingestellt ist. Die zweite Symbolfläche kann dementsprechend mit dem Bild eines Mondes versehen sein, um die Nachtabsenkung anzuzeigen. Der Stellantrieb verschiebt nun die Symbolflächen so, daß die eine oder andere sichtbar oder markiert ist. Dies erleichtert dem Benutzer die schnelle Erfassung des Betriebszustandes.

Hierbei ist besonders bevorzugt, daß die Symbolflächen auf der Innenseite eines Gehäuses angeordnet sind, das ein Fenster aufweist, hinter dem jeweils eine der Symbolflächen positionierbar ist. Das Gehäuse läßt also immer nur eine Symbolfläche erkennen. Die andere Symbolfläche ist vom Gehäuse abgedeckt. Es ist damit praktisch ausgeschlossen, daß eine unklare Anzeige des Zustandes erfolgt. Dies erleichtert die visuelle Erfassung des Betriebszustandes weiter.

Mit Vorteil verstellt der Stellantrieb die Anzeige bei Erreichen der jeweils einen Endstellung des Betätigungsgliedes. Damit ist eine zusätzliche Sicherheit dafür gegeben, ob das Betätigungsglied tatsächlich seine Endstellung erreicht hat. Solange dies noch nicht der Fall ist, wird die Anzeige auch nicht verstellt.

Hierbei ist besonders bevorzugt, daß der Stellantrieb ein Zahnradgetriebe aufweist, das mindestens ein Zahnrad aufweist, das bei der Bewegung des Betätigungsgliedes von einer Einstellung in die andere genau eine nahezu vollständige Umdrehung, ein ganzzahliges Vielfaches oder einen ganzzahligen Bruchteil einer Umdrehung ausführt. Die nahezu vollständige Umdrehung ergibt sich daraus, daß dann, wenn die Anzeige von einer Position in die andere verschoben wird und das Zahnrad mit entsprechenden Anbauten versehen ist, um diese Verschiebung zu bewirken, die Winkelbereiche, den die "Anbauten" und die Anzeige einnehmen, von den 360° einer vollen Umdrehung abzuziehen sind. Damit ist eine definierte Zuordnung zwischen der Betätigung des Stellantriebes, der Veränderung des Betätigungsgliedes und der Anzeige gegeben. Je nach Ausbildung des Zahnrades und seiner Lager, reichen aber auch eine Hälfte, ein Drittel, ein Viertel etc. einer Umdrehung aus oder es sind zwei, drei, vier etc. Umdrehungen erforderlich.

Vorzugsweise wirkt das Zahnrad direkt auf das Betätigungsglied. Das Zahnrad ist also das letzte Glied in der Kette zwischen dem Stellantrieb und dem Betätigungsglied. Dementsprechend gibt die Winkelstellung des Zahnrades auch unmittelbar Auskunft über die Einstellung des Betätigungsgliedes. Dies hält das Risiko von Fehlern klein.

Vorteilhafterweise weist das Zahnrad einen axial vorstehenden Fortsatz auf, dessen Länge größer ist als ein axialer Versatz des Zahnrades bei einer Umdrehung, wobei der Fortsatz mit der Anzeige zusammenwirkt. Man kann daher bei einer Drehung des Zahnrades dessen axiale Verlagerung zulassen, ohne Gefahr zu laufen, daß die Anzeige nicht mehr betätigt werden kann. Dementsprechend kann man das Zahnrad dazu verwenden, die Länge und/oder die axiale Position des Betätigungselements zu verändern.

Vorteilhafterweise weist der Stellantrieb eine Batterie als Energiequelle auf. Die Batterie treibt dann beispielsweise einen Elektromotor, der einen Teil des Stellantriebs bildet. Weitere Energie der Batterie wird nicht benötigt, insbesondere nicht zur permanenten Anzeige des Betriebszustandes.

Mit Vorteil verändert der Stellantrieb die Länge des Betätigungsgliedes und/oder dessen Position relativ zum Thermostatelement. Damit wirkt das Thermostatelement in Abhängigkeit von der Einstellung des Betätigungsgliedes früher oder später auf das Betätigungsglied, d.h. bei geringeren oder bei höheren Temperaturen. Weitere Eingriffe in die Übertragungsstrecke zwischen dem Thermostatelement und einem Ventilstößel sind hierbei nicht notwendig.

Die Erfindung wird im folgenden anhand eines bevorzugten Ausführungsbeispiels in Verbindung mit der Zeichnung näher beschrieben. Hierin zeigen:
- Fig. 1: eine schematische Schnittansicht durch einen Thermostataufsatz,
- Fig. 2: einen Außenansicht des Thermostataufsatzes und
- Fig. 3: einen Schnitt III-III nach Fig. 1.

Ein Heizungsventil-Thermostataufsatz 1 weist ein Thermostatelement 2 auf, das mit einem Füllstoff, z.B. einer Flüssigkeit gefüllt ist, der sich bei einer Temperaturerhöhung ausdehnt, also sein Volumen vergrößert. Der Thermostataufsatz 1 weist einen Drehgriff 3 auf. Wenn der Drehgriff 3 verdreht wird, dann ändert sich die axiale Position des Thermostatelements 2. Damit läßt sich ein Sollwert für die Raumtemperatur vorgeben, die der Thermostataufsatz regeln soll.

Das Thermostatelement 2 weist entlang seiner axialen Mitte einen Balgen 4 auf, in den eine Spindel 5 eingesteckt ist. In der Spindel 5 ist eine Überdruckfeder 6 angeordnet, die sich an der oberen Stirnwand 7 der Spindel 5 abstützt. Das andere Ende der Überdruckfeder 6 stützt sich an einem Konus 8 ab, dessen unteres Ende eine Anlagefläche 9 für einen nicht näher dargestellten Stößel eines Heizkörperventils bildet. Die Überdruckfeder 6 ist relativ steif. Wenn sich also die Spindel 5 verlagert, dann wird auch der Konus 8 und damit die Anlagefläche 9 verlagert. Die Spindel bildet hier mit der Feder 6 und dem Konus 8 ein Betätigungsglied.

Der Konus 8 ist in ein Halteteil 10 eingeschraubt, das an seinem oberen Ende ein Trapezgewinde 11 aufweist. Das Trapezgewinde steht in Verbindung mit einem Gegengewinde 12 an einem Fortsatz 13 eines Zahnrades 14. An der Stirnseite des Fortsatzes 13 liegt unter Zwischenschaltung einer Scheibe 15 aus Teflon oder einem anderen reibungsvermindernden Material ein umlaufender Flansch 16 der Spindel 5 an. Wenn also das Zahnrad 14 in dem Halteteil 10 verdreht wird, dann ändert sich die aktive Länge des Betätigungsgliedes, d.h. der Abstand zwischen der Stirnwand 7 und der Anlagefläche 9. Gleichzeitig wird auch die Position der Spindel 5 relativ zu dem Thermostatelement 2 verändert. Wenn beispielsweise das Zahnrad 14 so gedreht wird, daß der Flansch 16 weiter in Richtung auf die Anlagefläche 9 zu bewegt wird, dann ist eine höhere Temperatur erforderlich, um mit Hilfe des Thermostatelementes 2 den gleichen Schließzustand des nicht näher dargestellten Heizkörperventils zu erreichen, als in dem Fall, wo das Zahnrad 14 so gedreht worden ist, daß die Entfernung zwischen der Anlagefläche 9 und der Stirnwand 7 größer ist.

Durch das Verdrehen des Zahnrades 14 läßt sich also im erstgenannten Fall eine Komforteinstellung wählen, bei der beispielsweise eine Raumtemperatur von 20°C herrschen soll. Im anderen Fall wird die Temperatur bei unveränderter Stellung des Drehgriffs 3 um 3 bis 4°C abgesenkt, beispielsweise um eine Nachtabsenkung der Temperatur in dem entsprechenden Raum lokal zu bewirken, d.h. nur durch den Thermostataufsatz gesteuert.

Um das Zahnrad 14 drehen zu können, ist ein Motor 17 in einem Antriebsgehäuse 18 angeordnet, das mit dem Thermostataufsatz 1 fest verbunden ist, beispielsweise durch eine Rastverbindung. Der Motor 17 bekommt seine Energie von zwei Batterien 19, 20, die ebenfalls im Antriebsgehäuse 18 angeordnet sind. Gesteuert wird der Motor von einer Steuereinheit 21, die beispielsweise eine Zeitschaltuhr aufweisen kann. Es ist aber auch möglich, daß es sich bei der Steuereinheit 21 um einen Empfänger für Funksignale handelt, die von einer Fernbedienung aus abgegeben werden.

Der Motor 17 weist an seiner Ausgangswelle 22 ein Zahnrad 23 auf, das mit einem Zwischenrad 24 in Eingriff steht. Das Zwischenzahnrad 24 ist einstückig mit einem Ritzel 25 verbunden das wiederum mit dem Zahnrad 14 kämmt.

Auf dem Zahnrad 14 ist ein axial vorstehender Fortsatz 26 angeordnet, der in Richtung auf das Thermostatelement weist. Dieser Fortsatz 26 dient zum Betätigen einer Anzeige, die im folgenden erläutert wird.

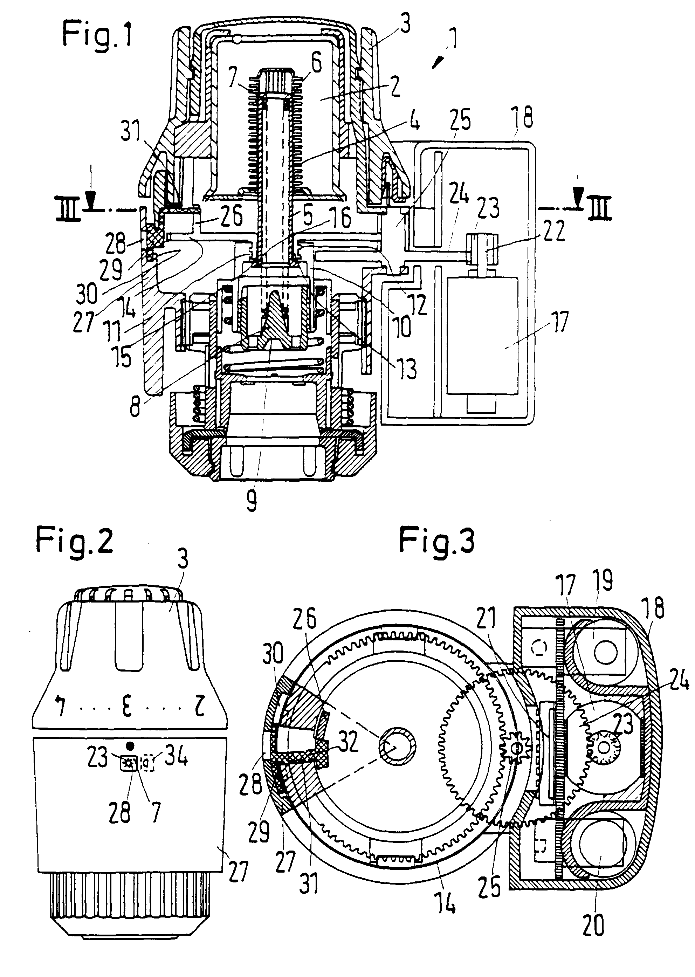

Der Thermostataufsatz 1 weist ein Gehäuse 27 auf, das mit einem Fenster 28 versehen ist. An der Innenseite des Gehäuses hinter dem Fenster befindet sich ein .Schieber 29, der in einer Nutanordnung 30 im Gehäuse in Umfangsrichtung bewegbar ist. Der Schieber 29 weist einen radial nach innen ragenden Steg 31 auf, an dessen radial inneren Ende eine Anschlagzone 32 gebildet ist. Der Fortsatz 26 kommt nun, wie dies aus Fig. 3 zu erkennen ist, mit der Anschlagzone 32 in Kontakt, wenn sich das Zahnrad 14 dreht, und nimmt damit den Schieber 29 mit. Fig. 3 zeigt die Situation, wo sich das Zahnrad 14 im Gegenuhrzeigersinn gedreht hat. Dementsprechend ist der Schieber 29 auch in Gegenuhrzeigersinn verschoben worden. Wenn sich nun das Zahnrad 14 im Uhrzeigersinn dreht, dann kommt nach einer fast vollständigen Umdrehung der Fortsatz 26 in Berührung mit der Anschlagzone 32, so daß der Schieber 29 im Uhrzeigersinn verschoben wird.

Auf dem Schieber 29 befindet sich eine erste Symbolfläche 23 die mit dem Symbol einer Sonne versehen ist und eine zweite Symbolfläche 34, die mit dem Symbol eines Mondes versehen ist. Da die zweite Symbolfläche 34 in Fig. 2 nicht sichtbar ist, sondern durch das Gehäuse 27 abgedeckt ist, ist sie in Fig. 2 nur gestrichelt eingezeichnet.

Der Schieber 29 mit seinem Steg 31 bildet damit gleichzeitig eine Drehwinkelbegrenzung für das Zahnrad 14.

Die Steigung des Trapezgewindes 11 und des Gegengewindes 12 ist nun so eingestellt, daß die Spindel 5 in einer Endstellung des Zahnrades 14 die unterste Position einnimmt (bezogen auf die Darstellung in Fig. 1) und in der anderen Endstellung des Zahnrades 14 die oberste Position.

Wenn man also in der in Fig. 3 dargestellten Position auf Nachtabsenkung schalten möchte, dann wird der Motor 17 in Betrieb genommen. Dieser dreht über das Getriebe das Zahnrad 14 im Uhrzeigersinn und zwar solange bis der Fortsatz 26 an die Anschlagzone 32 zur Anlage kommt und den Schieber 29 in die andere Endposition schiebt, in der der Mond auf der zweiten Symbolfläche im Fenster 28 sichtbar ist. Hierbei erfolgt das Verschieben des Schiebers 29 erst dann, wenn tatsächlich die entsprechende Nachtabsenkungsstellung erreicht ist. Der Benutzer kann mit einem einfachen Blick auf das Gehäuse 27 feststellen, welchen Zustand der Thermostataufsatz eingenommen hat.

Der Fortsatz 26 hat in Axialrichtung eine ausreichende Länge, um bei einem axialen Versatz des Zahnrades 14 immer in Kontakt mit der Anschlagzone 32 zu bleiben, wobei die axiale Verlagerung des Zahnrades 14 einerseits durch die Drehung im Gegengewinde 12 verursacht sein kann und andererseits auch durch eine Bewegung der Spindel 5, die über den Konus 8 und das Halteteil 10 sowie die Gewindepaarung 11, 12 auf das Zahnrad 14 übertragen wird.

## Patentansprüche

1. Heizungsventil-Thermostataufsatz mit einem Thermostatelement, das in Abhängigkeit von der Umgebungstemperatur ein Betätigungsglied verstellt, und einem Stellantrieb, der einen Wirkzusammenhang zwischen dem Betätigungsglied und dem Thermostatelement ändert, dadurch gekennzeichnet, daß der Stellantrieb (17, 23, 24, 25, 14) auf eine mechanische Anzeige (28, 29) einwirkt.

2. Thermostataufsatz nach Anspruch 1, dadurch gekennzeichnet, daß die mechanische Anzeige (28, 29) eine erste Symbolfläche (33) und eine zweite Symbolfläche (34) aufweist, die durch den Stellantrieb (17, 23, 24, 25, 14) verschiebbar sind.

3. Thermostataufsatz nach Anspruch 2, dadurch gekennzeichnet, daß die Symbolflächen (33, 34) auf der Innenseite eines Gehäuses (27) angeordnet sind, das ein Fenster (28) aufweist, hinter dem jeweils eine der Symbolflächen (33, 34) positionierbar ist.

4. Thermostataufsatz nach einem der Ansprüche 1 bis 3, dadurch gekennzeichnet, daß der Stellantrieb (17, 23, 24, 25, 14) die Anzeige (28, 29) bei Erreichen der jeweils einen Endstellung des Betätigungsgliedes (5-9) verstellt.

5. Thermostataufsatz nach Anspruch 4, dadurch gekennzeichnet, daß der Stellantrieb (17, 23, 24, 25, 14) ein Zahnradgetriebe (23, 24, 25, 14) aufweist, das mindestens ein Zahnrad (14) aufweist, das bei der Bewegung des Betätigungsgliedes (5-9) von einer Einstellung in die andere genau eine nahezu vollständige Umdrehung, ein ganzzahliges Vielfaches oder einen ganzzahligen Bruchteil einer Umdrehung ausführt.

6. Thermostataufsatz nach Anspruch 5, dadurch gekennzeichnet, daß das Zahnrad (14) direkt auf das Betätigungsglied (5-9) wirkt.

7. Thermostataufsatz nach Anspruch 5 oder 6, dadurch gekennzeichnet, daß das Zahnrad (14) einen axial vorstehenden Fortsatz (26) aufweist, dessen Länge größer ist als ein axialer Versatz des Zahnrades (14) bei einer Umdrehung, wobei der Fortsatz (26) mit der Anzeige (28, 29) zusammenwirkt.

8. Thermostataufsatz nach einem der Ansprüche 1 bis 7, dadurch gekennzeichnet, daß der Stellantrieb (17, 23, 24, 25, 14) eine Batterie (19, 20) als Energiequelle aufweist.

9. Thermostataufsatz nach einem der Ansprüche 1 bis 8, dadurch gekennzeichnet, daß der Stellantrieb (17, 23, 24, 25, 14) die Länge des Betätigungsgliedes (5-9) und/oder dessen Position relativ zum Thermostatelement (2) verändert.
